# EUROPEAN PATENT APPLICATION

(11) **EP 2 685 449 A1**
(43) Date of publication of application: **15.01.2014**
(21) Application number: 13173612.6
(22) Date of filing: 25.06.2013
(51) Int. Cl.: G10L 13/033, G06F 3/16, H04N 21/431, H04N 21/472

(54) **Method for providing contents information and broadcasting receiving apparatus thereof**

(30) Priority: 12.07.2012 KR 20120076242
(71) Applicant: Samsung Electronics Co., Ltd, Gyeonggi-do 443-742 (KR)
(72) Inventor: Park, Sung-woo, Seoul (KR); Shin, Jun-hyung, Gyeonggi-do (KR); Nam, Dae-hyun, Gyeonggi-do (KR)
(74) Representative: Brandon, Paul Laurence

(57) **Abstract**

A method of providing contents information and broadcast receiving apparatus are provided. The method of providing contents information includes requesting, according to user input, a contents providing server to perform a contents search; receiving contents data on contents searched in response to the contents search request from the contents providing server; converting the contents data into audio data using a Text-To-Speech technology; and processing the audio data and outputting the processed audio data, according to at least one characteristic of the searched contents and/or user input.

## Description

### CROSS-REFERENCE TO RELATED APPLICATION

This application claims priority from Korean Patent Application No. 10-2012-0076242, filed in the Korean Intellectual Property Office on July 12, 2012, the disclosure of which is incorporated herein by reference in its entirety.

### BACKGROUND

### 1. Field

Methods and apparatuses consistent with exemplary embodiments relate to a method for providing contents information and a broadcast receiving apparatus which employs the method, and more particularly to a method for providing contents information using a Text-To-Speech (TTS) technology in a dialogue type voice recognition system, and a broadcast receiving apparatus which employs the method.

### 2. Description of the Prior Art

As communication technology develops, televisions (TVs) are being developed which may receive various contents through an external server, and display the received contents.

Particularly, in a case of executing contents using a broadcast receiving apparatus, a user may request to search contents from an externally located contents providing server, and the contents providing server may transmit searched contents data to the broadcast receiving apparatus in response to the user's request to search contents. In addition, the broadcast receiving apparatus displays a contents list using the contents data transmitted from the contents providing server, and provides information on the searched contents to the user. That is, conventionally, only a visual User Interface (UI) such as a contents list which includes text is used to provide contents information to a user.

However, in a case of providing contents information using only a visual UI, when a case occurs where it is not possible to confirm a visual UI, there is a problem that the user is not able to confirm contents information through the visual UI.

Therefore, there is a need for a method of providing contents information to a user using a technique other than a visual UI such as a contents list.

### SUMMARY

Exemplary embodiments relate to a method of providing contents information which converts contents data into audio data using TTS technology, processing the converted audio data according to a contents characteristic or user input, and a broadcast receiving apparatus, providing contents information in an audio format.

According to an aspect of an exemplary embodiment, there is provided a method of providing contents information of a broadcast receiving apparatus, the method including: requesting, according to user input, a contents providing server to perform a contents search; receiving contents data on contents searched in response to the contents search request, from the contents providing server; converting the contents data into audio data using TTS technology; and processing the audio data and outputting the processed audio data, according to at least one characteristic of the searched contents and/or user input.

The converting may include parsing metadata of the contents data to output text data; and converting the text data into the audio data using the TTS technology.

The method may further include determining a genre of the contents from the metadata, and the processing of the audio data and the outputting of the processed audio data may include processing the audio data in an audio setting corresponding to the genre of the contents, and outputting the processed audio data.

The method may further include generating a contents list using the contents data and displaying the generated contents list, and if one of the contents contained in the generated contents list is selected by user manipulation, the outputting of the processed audio data includes outputting contents data on the selected contents as the processed audio data.

If an audio playback command on all contents contained in the contents list is input by the user manipulation, the outputting of the processed audio data may include outputting contents data of all contents contained in the contents list in an order in which the contents are displayed.

In addition, if the user input is a voice command, the requesting may include receiving the voice command requesting the contents search; converting the voice command into a digital signal; transmitting the digital signal to an external voice recognition server; receiving text information corresponding to the digital signal from the voice recognition server; and transmitting the text information to the contents providing server.

The method may further include analyzing an intonation of the voice command, and the processing of the audio data and the outputting of the processed audio data may include processing the audio data in a setting according to the analyzed intonation of the voice command and outputting the processed audio data.

The contents information may include at least one of a title, genre, playback time, storyline, main characters, director, producer, and provided languages of the contents, and the contents information is output as the processed audio data and may be set by a user.

According to an aspect of another exemplary embodiment, there is provided a broadcast receiving apparatus including: a user input unit which receives an input user command; a communication unit which performs communication with a server; a TTS conversion unit which converts text data into audio data using TTS technology; and a controller which controls the communication unit to request a contents providing server to perform a contents search according to the user command input to the user input unit, controls the communication unit to receive contents data on contents searched in response to the contents search request from the contents providing server, controls the TTS conversion unit to convert the contents data into audio data, and controls an audio output unit to process the audio data and output the processed audio data, according to at least one characteristic of the searched contents and/or user input.

The controller may parse metadata of the contents data extract text data, and control the TTS conversion unit to convert the extracted text data into the audio data.

The controller may determine a genre of the contents from the metadata, and control the audio output unit to process the audio data in an audio setting corresponding to the genre of the contents and output the processed audio data.

The apparatus may further include a display unit, and the controller may control the display unit to generate a contents list using the contents data and to display the generated contents list, and if one of the contents contained in the contents list is selected by another user command input in the user input unit, control the audio output unit to output the contents data on the selected contents as the audio data.

If an audio playback command on all contents contained in the contents list is input in the user input unit, the controller may control the audio output unit to output contents data of all contents contained in the contents list as the audio data in an order in which the contents are displayed.

The user input unit may include a voice input unit which receives an input voice command, and when an input voice command requesting a contents search is input through the voice input unit, the controller may convert the input voice command into a digital signal, control the communication unit to transmit the digital signal to a voice recognition server, receive text information corresponding to the digital signal from the voice recognition server, and transmit the text information to the contents providing server.

The controller may analyze an intonation of the input voice command, and control the audio output unit to process the audio data and output the processed audio data in a setting according to the analyzed intonation of the input voice command.

The contents information may include at least one of a title, genre, playback time, story line, main characters, director, producer, and provided languages of the contents, and the contents information is output as the processed audio data and may be set by a user.

According to an aspect of another exemplary embodiment, there is provided a display apparatus including: an input unit which receives a command; an audio output unit which outputs audio; a communication unit which communicates with a server which stores content to be displayed; and a controller which controls the communication unit to retrieve the content from the server according to the command received by the input unit, converts a portion of the retrieved content into converted audio, and controls the audio output unit to output the converted audio.

### BRIEF DESCRIPTION OF THE DRAWINGS

The above and/or other aspects will be more apparent by describing certain exemplary embodiments with reference to the accompanying drawings, in which:

FIG. 1 is a view illustrating a voice recognition system, according to an exemplary embodiment;

FIG. 2 is a view illustrating a configuration of a broadcast receiving apparatus, according to an exemplary embodiment;

FIGs. 3 and 4 are views illustrating a contents list, according to an exemplary embodiment; and

FIG. 5 is a flowchart illustrating a method of providing contents information, according to an exemplary embodiment.

### DETAILED DESCRIPTION

Certain exemplary embodiments are described in detail below with reference to the accompanying drawings.

In the following description, like drawing reference numerals are used for the like elements, even in different drawings. The matters defined in the description, such as a detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

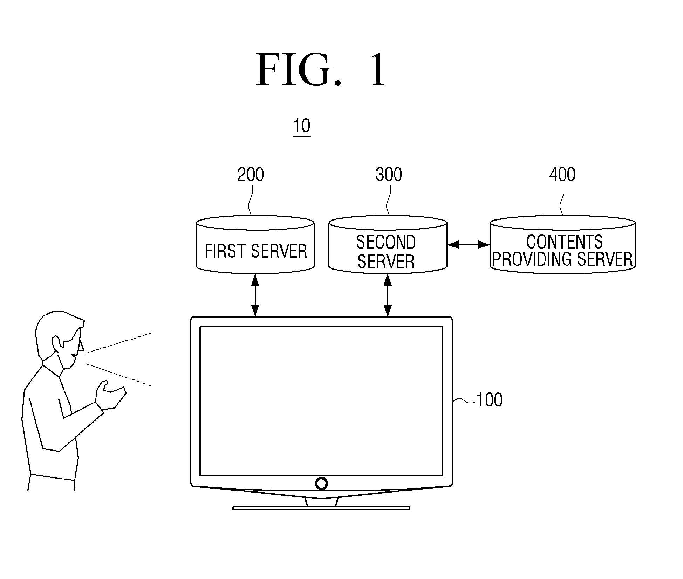

FIG. 1 is a view illustrating a dialogue type voice recognition system 10, according to an exemplary embodiment. As illustrated in FIG. 1, the dialogue type voice recognition system 10 includes a broadcast receiving apparatus 100, a first server 200, a second server 300 and a contents providing server 400. In an exemplary embodiment, the broadcast receiving apparatus 100 is implemented as an apparatus such as a smart TV, but this is merely an exemplary embodiment, and thus, the broadcast receiving apparatus 100 may be implemented as other types of apparatuses, such as, for example, a monitor or set top box.

When a user's voice is input by a voice input device, the broadcast receiving apparatus 100 converts the input user's voice into a digital signal, and transmits the converted digital signal to the first server 200. According to an exemplary embodiment, the term "voice" may refer to a voice command spoken by a user, where the voice command may be, for example, a command to perform a search, a request for information, etc. When the digital signal is received from the broadcast receiving apparatus 100, the first server 200 converts the received digital signal corresponding to the user's voice into text information using at least one of various mechanisms, such as, for example, a language model, sound model, and pronunciation dictionary, and transmits the text information to the broadcast receiving apparatus 100.

In addition, the broadcast receiving apparatus 100 transmits the text information received from the first server 200 to the second server 300. When the text information is received from the broadcast receiving apparatus 100, the second server 300 generates response information corresponding to the received text information and transmits the generated response information to the broadcast receiving apparatus 100. In an exemplary embodiment, the response information includes at least one of a response message, a control signal, and a contents search result corresponding to the user's voice. A response message is text information responding to a user's voice. For example, if the user's voice says "would you search _?", the response message may be text information such as "yes" which responds to the user's voice. A control signal is a signal for controlling the broadcast receiving apparatus 100 corresponding to the user's voice. For example, if the user's voice says "change the channel to _(channel name)", the control signal may be a signal that controls a tuner of the broadcast receiving apparatus 100 to select the channel corresponding to the user's voice. A contents search result is information responding to a contents search request by a user. For example, if the user's voice is "who is the main character in _(movie title)?", the contents search result may be information identifying the main character searched in response to the user's voice.

The second server 300 may determine whether received text information is a contents search request. In a case where the received text information is a contents search request, the second server 300 transmits the contents search request to the contents search server 400 and receives contents data on contents searched in response to the contents search request made by the user, from the contents search server 400. In addition, the second server 300 may transmit contents data to the broadcast receiving apparatus 100 as response information.

Based on the response information, the broadcast receiving apparatus 100 may perform various functions corresponding to a user's voice. For example, when a user's voice for changing a channel is input, the broadcast receiving apparatus 100 may select the corresponding channel and display the selected channel. In this case, at the same time as the channel is selected, the broadcast receiving apparatus 100 may provide a response message corresponding to the corresponding function. In the aforementioned example, the broadcast receiving apparatus 100 may output information on the changed channel or a message showing that the channel changing has been completed in a voice or text format.

The broadcast receiving apparatus 100 may output the response message corresponding to the user's voice in a voice or text format, and may output contents data which is related to the searched contents. For example, when a user's voice says "what are the recently released movies?", which is a request for contents information, the broadcast receiving apparatus 100 outputs a response message, such as "I will tell you the recently released movies" from the second server 300 as audio, and displays contents data on the searched recently released movies.

The broadcast receiving apparatus 100 may use a TTS algorithm to convert the received contents data into audio data, and may output the converted audio data according to a user's request. In an embodiment, the broadcast receiving apparatus 100 may process the audio data and output the processed audio data, according to at least one characteristic of the searched contents and/or user input (for example, a user's voice). For example, the broadcast receiving apparatus 100 may process the audio data and output the processed audio data in different settings according to a type of the searched contents, and may process the audio data and output the processed audio data according to an intonation of the user's voice.

In addition, after generating and displaying a contents list using contents data on the searched contents, the broadcast receiving apparatus 100 may output the contents information of the contents displayed on the contents list as audio data.

In an exemplary embodiment, the broadcast receiving apparatus 100 is connected to the contents providing server 400 through the second server 300, but this is merely an exemplary embodiment, and the broadcast receiving apparatus 100 may perform communication with the contents providing server 400 directly or through other connection configurations. Also, the second server 300 may be connected to the contents providing server 400 in various ways, for example, the second server 300 may be connected to the contents providing server 400 over the Internet.

According to the dialogue type voice recognition system 10 described above, a user is provided with contents information using an audio UI. In addition, by processing audio data according to a contents characteristic or user input, the broadcast receiving apparatus 100 achieves a high entertainment value.

Hereinbelow is a detailed explanation of the broadcast receiving apparatus 100 according to an exemplary embodiment.

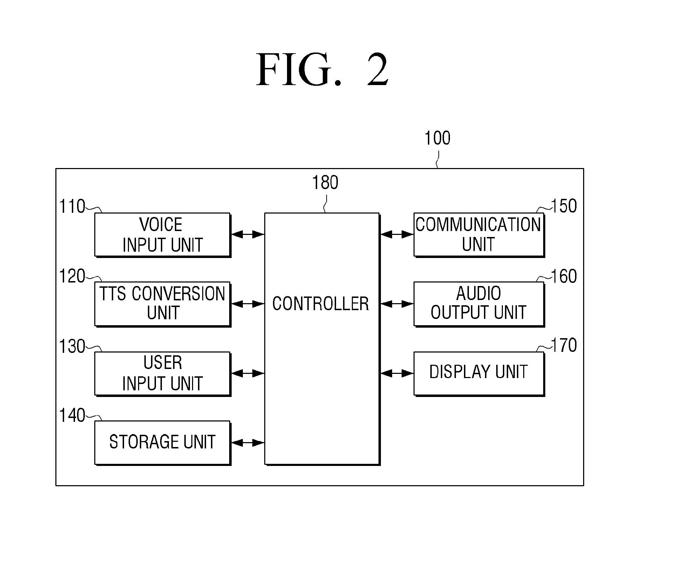

As illustrated in FIG. 2, the broadcast receiving apparatus 100 includes a voice input unit 110, a TTS conversion unit 120, a user input unit 130, a storage unit 140 (e.g., a memory, a storage, etc.), a communication unit 150, an audio output unit 160, a display unit 170 (e.g., a display, etc.)_ and a controller 180.

The voice input unit 110 receives a user's voice (e.g., a voice command) and performs a signal processing operation so as to enable voice recognition. More specifically, the voice input unit 110 converts an analogue type user voice, which has been input into the voice input unit 110, into a digital signal. In addition, the voice input unit 110 calculates the energy of the converted digital signal and determines whether the energy of the digital signal is greater than or equal to a predetermined value. If the energy of the digital signal is below the predetermined value, the voice input unit 110 determines that the digital signal which has been input is not a user's voice, and waits for another user's voice. If the energy of the digital signal is greater than or equal to the predetermined value, the voice input unit 110 removes noise from the digital signal. Specifically, the voice input unit 110 removes noise (for example, sounds created by an air conditioner or a vacuum cleaner, music, etc.) that may occur in a home environment from which the digital signal has been input. In addition, the voice input unit 110 outputs the digital signal from which noise has been removed to the communication unit 150.

According to an exemplary embodiment, the voice input unit 110 may be implemented as a voice input device such as a microphone. The voice input device may be built in the broadcast receiving apparatus 100 to form an all-in-one system, or may be implemented to be separated from the broadcast receiving apparatus 100. In a case where the voice input device is implemented to be separated from the broadcast receiving apparatus 100, the voice input device may be implemented as a type that may be grasped by a user, and/or a type that may be placed on a table. Furthermore, the voice input device may be connected to the broadcast receiving apparatus 100 either through a wired connection or wirelessly.

The TTS conversion unit 120 uses a TTS algorithm to convert text data into audio data. A TTS algorithm may be one of various types of TTS algorithms.

The TTS conversion unit 120 may convert text data extracted from metadata of contents data received from the contents search server 400 into audio data.

The user input unit 130 receives a user command for controlling the broadcast receiving apparatus 100. The user input unit 130 may receive a user command for a content search. The user input unit 130 may be implemented as one of various input devices such as a remote control, a mouse, a keyboard, etc.

The storage unit 140 stores various programs and data for driving the broadcast receiving apparatus 100. When a user's voice is input, the storage unit 140 may store a result of an analysis of characteristics of the user's voice. For example, the storage unit 140 may analyze a frequency, etc., of the user's voice, and store information on an intonation, speed, etc. of the user's voice.

The communication unit 150 performs communication with the external servers 200, 300, 400. The communication unit 150 may transmit a digital signal corresponding to a user's voice received from the voice input unit 110, and may receive text information corresponding to the user's voice from the first server 200. In addition, the communication unit 150 may transmit text information corresponding to the user's voice to the second server 300, and may receive response information corresponding to the text information from the second server 300. According to an exemplary embodiment, the response information may include contents data of the contents requested by the user.

In addition, the communication unit 150 may be implemented as a wireless communication module which is connected to an external network and performs communication according to a wireless communication protocol, such as Wifi, IEEE, etc. The wireless communication module may further include mobile communication modules which access a mobile communication network and perform communication according to various mobile communication standards, such as 3rd Generation (3G), 3rd Generation Partnership Project (3GPP), Long Term Evolution (LTE), etc.

In the aforementioned exemplary embodiment, the communication unit 150 for communicating with the first server 200 and second server 300 is an integrated type, but this is merely an exemplary embodiment, and thus, the communication unit 150 for communication with the first server 200 and the second server 300 may be separated as a first communication unit which communicates with the first server 200 and a second communication unit which communicates with the second server 300.

The audio output unit 160 outputs audio data. According to an exemplary embodiment, the audio output unit 160 may output audio data converted from contents data. The audio output unit 160 may be implemented as an output port, such as a speaker, a jack, etc.

The display unit 170 may be implemented as a liquid crystal display (LCD), organic light emitting display (OLED), plasma display panel (PDP) etc., and includes a display screen which may be integrated into the broadcast receiving apparatus 100. The display unit 170 may display a response message corresponding to a user's voice in a text or image format. In addition, the display unit 170 may generate a contents list generated by using contents data received from the contents providing server 400.

The controller 180 controls overall operations of the broadcast receiving apparatus 100 according to a user command input through the voice input unit 110 and user input unit 120. The controller 180 may control the communication unit 150 to request the contents providing server 400 for a contents search according to user input, and to receive contents data on contents searched in response to the contents search request from the contents providing server 400. In addition, the controller 180 controls the TTS conversion unit 120 to convert the received contents data into audio data. In addition, the controller 180 processes the audio data and outputs the processed audio data through the audio output unit 160, according to at least one characteristic of the searched contents and/or user input.

More specifically, the controller 180 requests for a contents search according to a user command input through the voice input unit 110 and/or user input unit 130. For example, if a user's voice stating: "what are the recently released movies?" is input through the voice input unit 110, the controller 180 may perform a voice recognition using the first server 200 and second server 300, and request the contents providing server 400 for contents data of the recently released movies. As another example, if a user's command to "search for recently released movies" is input through the user input unit 130, the controller 180 may request the contents providing server 400 for contents data on the recently released movies.

Furthermore, the controller 180 may receive contents data corresponding to a contents search request from the contents providing server 400 through the communication unit 150. For example, when a contents search request for recently released movies is received from the broadcast receiving apparatus 100, the contents providing server 400 may transmit contents data on the movies released within a certain period (for example, 2 weeks) to the broadcast receiving apparatus 100. According to an exemplary embodiment, the contents data may store contents information such as a title, genre, playback time, story line, main characters, director, producer, provided languages, etc., as metadata.

When the contents data is received from the contents providing server 400, the controller 180 parses the metadata of the received contents data and extracts text data corresponding to the contents information.

In addition, the controller 180 may use the text data corresponding to the contents information, to display the contents information on the searched contents on the display unit 170.

When a user command for outputting the contents information as audio data is input, the controller 180 may use TTS technology to convert the text data corresponding to the contents information into audio data, and then control the audio output unit 160 to output the audio data. For example, in a state where contents information on "_(movie title)" is displayed, when a user command for an audio output of the contents information (for example, when a user selects a certain button on a remote control) is input, the controller 180 may convert the contents information on "_" (for example, at least one of a title, genre, playback time, story line, main characters, director, producer, provided languages, etc.) into audio data, and then output the converted audio data.

The contents data which has been output may be altered by a user setting. For example, in a case where the user sets only the title and story line of the contents, the controller 180 may convert information on only the title and story line of the contents into audio data and output the converted audio data.

According to an exemplary embodiment, the controller 180 may process the audio data according to at least one characteristic of the contents and/or user input.

More specifically, the controller 180 may process the audio data in an audio setting corresponding to a genre of the contents. For example, if the genre of the movie contents is "horror movie", the controller 180 may process the audio data to be output as a spooky human voice so as to correspond to the "horror movie" genre. As another example, if the genre of the movie contents is "children's movie", the controller 180 may process the audio data to be output as a child's voice so as to correspond to the "children's movie" genre.

In addition, the controller 180 may analyze a user's voice, and process the audio data differently according to a characteristic of the user's voice. For example, if the user's voice is faster than a predetermined speed and there are severe changes in the intonation, the controller 180 may analyze the user's voice and determine that the user is agitated, and process the audio data to be output as a calm human voice.

As described above, by processing audio data according to at least one characteristic of the contents and/or user input, the broadcast receiving apparatus 100 achieves a high entertainment value.

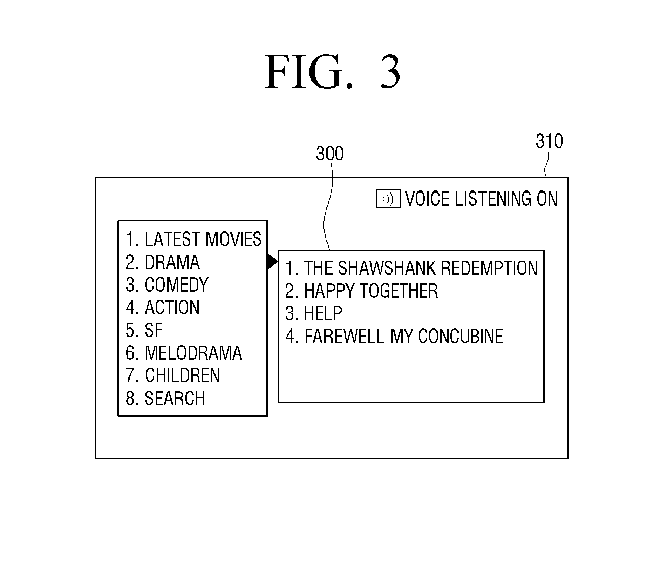

In addition, the controller 180 may use the received contents data and generate a contents list. For example, as illustrated in FIG. 3, the controller 180 may generate a movie contents list 300.

When an audio playback command requesting contents information of all contents contained in the contents list is input, the controller 180 may output contents information on all contents contained in the contents list as audio data in a display order. For example, as illustrated in FIG. 3, in a state where the contents list 300 is displayed, when an audio playback command requesting the contents information of all contents is input, the controller 180 may output contents information of all the contents in the contents list 300, for example, a list of movies (e.g., The Shawshank Redemption, Happy Together, Help, Farewell My Concubine, etc.) as audio data, in an order in which the contents are displayed. As illustrated in FIG. 3, the controller 180 may also display a notice message 310 which notifies that contents information is being output as audio data.

According to an exemplary embodiment, the contents information being output may be altered by a user setting. For example, if the user sets only a title and story line of the contents, the controller 180 may convert only the title and story line of the contents and output the converted information.

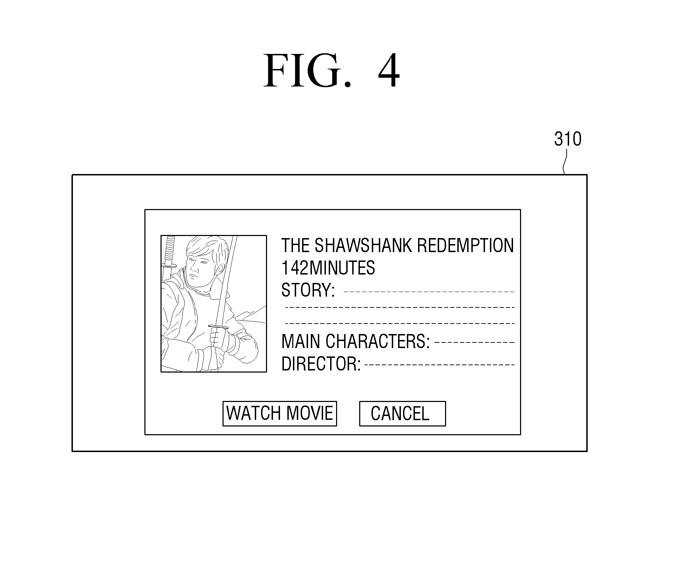

In addition, when one of the contents contained in the contents list is selected, the controller 180 may display the contents information on the selected contents on the display unit 170 and output the contents information as audio data. For example, in a state where the contents list 300 such as in FIG. 3 is displayed, when "The Shawshank Redemption" is selected by a user command, the controller 180 may display information on "The Shawshank Redemption" which is the contents information of the selected movie as illustrated in FIG. 4, and output the contents information as audio data.

By the aforementioned broadcast receiving apparatus 100, the user is provided with contents information through an audio UI.

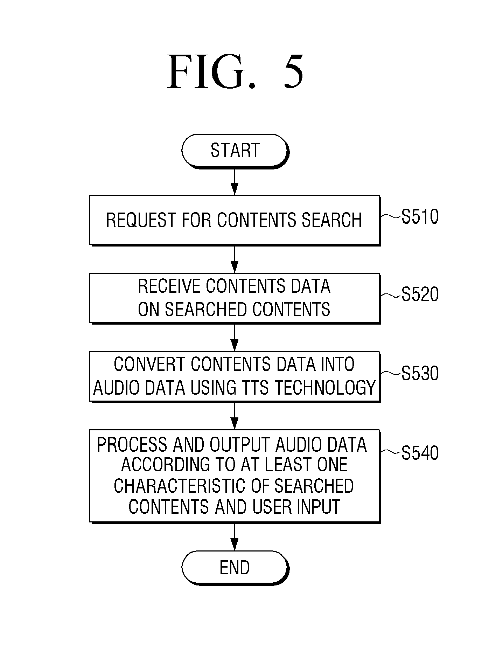

Hereinbelow is an explanation on a method of providing contents information, according to an exemplary embodiment, referring to FIG. 5.

First, a broadcast receiving apparatus 100 requests an externally located contents providing server 400 to perform a contents search at operation S510. The broadcast receiving apparatus 100 may request the contents search in response to receiving a user's voice (e.g., a voice command) or user input transmitted through a user input device (for example, a keyboard, mouse, touchpad, etc.).

Next, the broadcast receiving apparatus 100 receives contents data on searched contents from the contents providing server 400 at operation S520. The contents data may store contents information including, for example, at least one of a title, genre, playback time, story line, main characters, director, producer, and provided languages of the searched contents, as metadata.

Next, the broadcast receiving apparatus 100 converts the contents data into audio data using TTS technology at operation S530. More specifically, the broadcast receiving apparatus 100 may parse the metadata of the received contents data to extract text data including the contents information, and convert the text data into audio data using TTS technology.

Next, the broadcast receiving apparatus 100 processes the audio data according to at least one characteristic of the searched contents and/or user input, and outputs the processed audio data at operation S540. More specifically, the broadcast receiving apparatus 100 may process the audio data in an audio setting corresponding to the genre of the contents. For example, in a case where the genre of the movie contents is "horror movie", the broadcast receiving apparatus 100 may process the audio data to be output as a spooky human voice so as to correspond to the "horror movie" genre. As another example, in a case where the genre of the movie contents is "children's movie", the broadcast receiving apparatus 100 may process the audio data to be output as a child's voice so as to correspond to the "children's movie" genre. In addition, the broadcast receiving apparatus 100 may analyze the user's voice, and process the audio data differently so as to correspond to the characteristics of the user's voice. For example, if the user's voice is faster than a predetermined speed and there are severe changes in the intonation, the broadcast receiving apparatus 100 may analyze the user's voice and determine that the user is agitated, and process the audio data to be output as a calm human voice.

By the aforementioned method of providing contents, a user is able to receive contents information in an audio method, and as audio data of different settings can be output according to the genre of the contents, the mood of the user, and other characteristics, the broadcast receiving apparatus 100 may achieve a high entertainment value.

A program code for performing a method of providing contents information according to the aforementioned various exemplary embodiments may be stored in a non-transitory computer readable medium. A non-transitory computer readable medium refers to a computer readable medium which stores data semi-permanently unlike media such as a resistor, cache, and memory etc. which stores data for a short time. More specifically, the aforementioned various applications or programs may be stored and provided in a non-transitory computer readable medium such as a CD, a DVD, a hard disk, a blu-ray disk, USB, memory card, and ROM etc.

Although a few exemplary embodiments have been shown and described, it would be appreciated by those skilled in the art that changes may be made in these exemplary embodiments without departing from the principles and spirit of the inventive concept, the scope of which is defined in the claims and their equivalents.

## Claims

1. A method of providing contents information of a broadcast receiving apparatus, the method comprising:
requesting, according to user input, an external contents providing server for a contents search;
receiving contents data on contents searched in response to the contents search request, from the contents providing server;
converting the contents data into audio data using Text-To-Speech (TTS) technology;
and
processing the audio data and outputting the processed audio data, according to at least one characteristic of the search contents and user input.

2. The method according to claim 1, wherein the converting comprises:
parsing metadata of the contents data to output text data; and
converting the text data into audio data using the TTS technology.

3. The method according to claim 2, further comprising determining a genre of the contents from the metadata,
wherein the outputting processes the audio data in an audio setting corresponding to the genre of the contents, and outputs the processed audio data.

4. The method according to any one of claims 1 to 3, further comprising generating a contents list using the contents data and displaying the generated contents list,
wherein, if one of the contents contained in the contents list is selected by a user manipulation, the outputting outputs contents data on the selected contents as audio data.

5. The method according to claim 4, wherein, if an audio playback command on all contents contained in the contents list is input by the user manipulation, the outputting outputs contents data of all contents contained in the contents list in a display order.

6. The method according to any one of claims 1 to 5, wherein, if the user input is a voice input, the requesting comprises:
receiving an input of user voice for the contents search;
converting the input user voice into a digital signal;
transmitting the converted digital signal to an external voice recognition server;
receiving text information corresponding to the digital signal from the voice recognition server; and
transmitting the text information to the contents providing server.

7. The method according to claim 6, further comprising analyzing an intonation of the user voice,
wherein the outputting processes the audio data in a different setting according to the analyzed intonation of the user voice and outputs the processed audio data.

8. The method according to any one of claims 1 to 7, wherein the contents information comprises at least one of a title, genre, playback time, storyline, main characters, director, producer, and provided languages of the contents, and
the contents information output as the audio data may be set by the user.

9. A broadcast receiving apparatus comprising:
a user input unit which receives an input user command;
a communication unit which performs communication with an external server;
a TTS conversion unit which converts text data into audio data using Text-To-Speech (TTS) technology; and
a control unit which requests an external contents providing server for a contents search according to the user command input to the user input unit, controls the communication unit to receive contents data on contents searched in response to the contents search request from the contents providing server, controls the TTS conversion unit to convert the contents data into audio data, and controls the audio output unit to process the audio data and output the processed audio data, according to at least one characteristic of the searched contents and user input.

10. The apparatus according to claim 9, wherein the control unit parses metadata of the contents data to extract text data, and controls the TTS conversion unit to convert the extracted text data into audio data.

11. The apparatus according to claim 10, wherein the control unit determines a genre of the contents from the metadata, and controls the audio output unit to process the audio data in an audio setting corresponding to the genre of the contents and output the processed audio data.

12. The apparatus according to any one of claims 9 to 11 further comprising a display unit,
wherein the control unit controls the display unit to generate a contents list using the contents data and to display the generated contents list, and if one of the contents contained in the contents list is selected by the user command input in the user input unit, controls the audio output to output the contents data on the selected contents as audio data.

13. The apparatus according to claim 12, wherein, if an audio playback command on all contents contained in the contents list is input in the user input unit, the control unit controls the audio output unit to output contents data of all contents contained in the contents list as audio data in a display order.

14. The apparatus according to any one of claims 9 to 13, wherein the user input unit comprises a voice input unit which receives an input voice command, and
when an input voice command for a contents search is input through the voice input unit, the control unit converts the input voice command into a digital signal, controls the communication unit to transmit the converted digital signal to an external voice recognition server, receives text information corresponding to the digital signal from the voice recognition server, and transmits the text information to the contents providing server.

15. The apparatus according to claim 14, wherein the control unit analyzes an intonation of the input voice command, and controls the audio output unit to process the audio data and output the processed audio data in a different setting according to the analyzed intonation of the input voice command.
